(19) **Europäisches Patentamt**
**European Patent Office**
**Office européen des brevets**

(11) **EP 1 183 276 B3**

(12) **NEUE EUROPÄISCHE PATENTSCHRIFT**
Nach dem Beschränkungsverfahren (B3-1)

(45) Veröffentlichungstag und Bekanntmachung des Hinweises auf die Entscheidung über den Antrag auf Beschränkung:
**B3-1  18.08.2010   Patentblatt 2010/33**

(45) Hinweis auf die Patenterteilung:
**27.08.2003   Patentblatt 2003/35**

(21) Anmeldenummer: **00916861.8**

(22) Anmeldetag: **23.02.2000**

(51) Int Cl.:
**C08B 5/04** (1968.09)

(86) Internationale Anmeldenummer:
**PCT/EP2000/001481**

(87) Internationale Veröffentlichungsnummer:
**WO 2000/052058 (08.09.2000 Gazette 2000/36)**

(54) **VERFAHREN ZUR HERSTELLUNG VERDICHTETER RIESELFÄHIGER LACKROHSTOFFE**

METHOD FOR PRODUCING COMPACTED FREE-FLOWING RAW MATERIALS FOR VARNISH

PROCEDE DE PRODUCTION DE MATIERES PREMIERES ENTRANT DANS LA FABRICATION DES VERNIS, COULANTES ET COMPACTEES

(84) Benannte Vertragsstaaten:
**AT CH DE FR GB LI**

(30) Priorität: **03.03.1999   DE 19909230**

(43) Veröffentlichungstag der Anmeldung:
**06.03.2002   Patentblatt 2002/10**

(73) Patentinhaber: **Dow Wolff Cellulosics GmbH**
**29699 Bomlitz (DE)**

(72) Erfinder:
• **HOPPE, Lutz**
**D-29664 Walsrode (DE)**
• **LOHRIE, Martin**
**D-29664 Walsrode (DE)**
• **RIECHARDT, Lutz**
**D-29664 Walsrode (DE)**
• **TANNEBERGER, Holger**
**D-29683 Fallingbostel (DE)**

(74) Vertreter: **Fleischer, Holm Herbert et al**
**Patentanwälte Fleischer Godemeyer Kierdorf polypatent**
**Postfach 40 02 43**
**51410 Bergisch Gladbach (DE)**

(56) Entgegenhaltungen:
**EP-A- 0 084 153     EP-A- 0 137 357**
**GB-A- 871 299       US-A- 5 378 826**

EP 1 183 276 B3

**Beschreibung**

Die vorliegende Erfindung betrifft ein Verfahren zur Herstellung von verdichteter rieselfähiger wasser- oder alkoholfeuchter Nitrocellulose durch ein Hindurchdrücken derselben durch eine mit Löchern versehene Platte.

Niedrigveresterte Nitrocellulosen mit bis zu 12,6 % Stickstoffgehalt, die vorwiegend in der Lackindustrie Verwendung finden, werden durch Veresterung von Cellulosen mit Nitriersäuren, die gewöhnlich aus einem Gemisch von Salpetersäure, Schwefelsäure und Wasser bestehen, hergestellt.

Nachdem die Nitriersäure, meist durch intensive Wasserwäsche, entfernt und durch einen thermischen Abbauprozeß die gewünschte Molmasse der Nitrocellulose eingestellt wurde, muß zur Vermeidung von Selbstentzündung die so gewonnene Nitrocellulose, die von fasriger Struktur ist, phlegmatisiert werden. Hierzu finden unterschiedliche Phlegmatisierungsmittel Verwendung.

Neben dem Einmischen von Weichmachern ist die Anfeuchtung der Nitrocellulose mit Alkoholen und/oder Wasser das gebräuchlichste Verfahren. Die Nitrocellulosen werden üblicherweise mit Feuchtigkeitsgehalten der Alkohole (wie z.B. Ethanol, Isopropanol oder Butanol) und/oder Wasser von 30 bzw. 35 % in den Handel gebracht. Wird ein Anfeuchtungsgrad von 25 % unterschritten, sind diese niedrigverestemten Nitrocellulosen aufgrund des gestiegenen Gefährdungspotentials als "Explosive Stoffe" zu behandeln (redcommendations on the Transport of Dangerous Goods, 10. Auflage der Vereinigten Nationen (1997).

Diefaserförmigen Nitrocellulosen weisen aufgrund ihrer wolleartigen Struktur Schüttgewichte im Durchschnitt zwischen 250 und 350 g/l auf. Für den Versand solcher Produkte wirkt sich die niedrige Schüttdichte ungünstig auf die Verpackungsund Versandkosten aus. Dem begegnet man, indem die faserige Nitrocellulose in dem Verpackungsgebinde, wie z.B. einer Trommel oder einem Karton, gestampft wird. Auf diese Weise erhöht man zwar das Schüttgewicht, verschlechtert aber gleichzeitig die Rieselfähigkeit der Nitrocellulose. Dies führt zu einem erhöhten Arbeitsaufwand beim Entleeren der Nitrocellulosegebinde.

Die EP-A-137357 offenbart ein Verfahren zur Herstellung verdichteter Nitrocellulose, wobei die Nitrocellulose mit Hilfe eines Schneckenextruders zu einem Faden gedruckt wird, der dann in Teilstücke geschnitten wird.

Es ist ein Prozeß zur Behandlung faseriger Nitrocellulosen bekannt, um sie für den Transport und die Lagerung sicherer zu machen (GB-B-871 299). Zur Verdichtung wird auf die feuchte, faserige Nitrocellulose eine sie komprimierende Kraft P = 2M + 6400 ausgeübt, wobei P die Kraft in pound per square inch und M die mittlere Faserlänge der Nitrocellulose in microns ist. Die Kraft, vorzugsweise zwischen 15.000 und 17.000 psi (1.110-1.196 Kp/cm$^2$), wird durch zwei ohne Abstand arbeitende gegenläufige Walzen aufgebracht.

Die so erhaltene, blattartige Nitrocellulose muß anschließend in einem Aggregat in kleinere Stücke gebrochen werden. Ein großer Nachteil dieses Verfahrens ist - neben den hohen Investions- und Betriebskosten - das Entfeuchten der Nitrocellulose während der Walzenverdichtung. In der GB PS 871 299 weisen alle beispielhaft erhaltenen verdichteten Nitrocellulosen einen Anfeuchtungsgehalt unter 25 % auf und sind folglich Explosivstoffe. Die Praxis hat gezeigt, daß bei der Walzenverdichtung unter Einwirkung der hohen Drücke es zu Selbstentzündungen kommt, die eine Gefahr für Mensch und Apparatur darstellt, zumal sich im Walzenspalt immer eine größere Menge Nitrocellulose befindet.

Ein ähnliches Verfahrensprinzip wird in der US PS 5 378 826 beschrieben. Auch hier gelten die o.g. Nachteile.

Aufgabe der vorliegenden Erfindung war es daher, ein neues Verfahren zur Herstellung verdichteter rieselfähiger Nitrocellulose zur Verfügung zu stellen, welches das Entfeuchten der Nitrocellulose vermeidet.

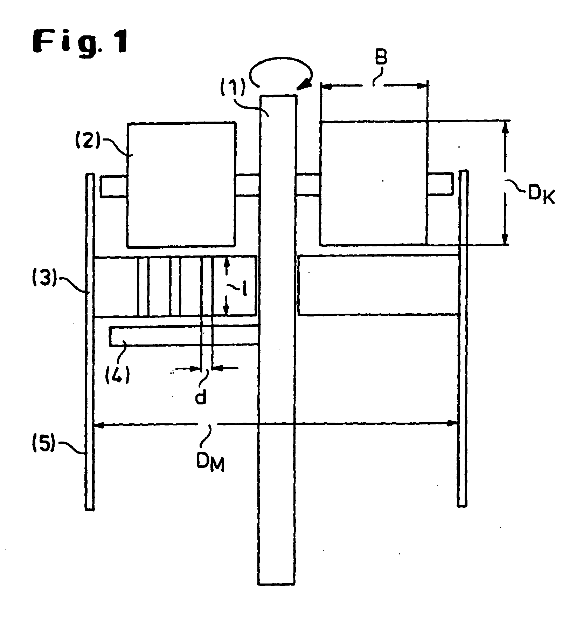

Es wurde nun überraschenderweise gefunden, daß verdichtete Nitrocellulose auch dadurch erhalten werden kann, daß in einem Kollergang die umlaufenden Koller (Räder), die auf einer mit Löchern versehenen Matrize (Platte) laufen, die angefeuchtete Nitrocellulose durch die Löcher (z.B. Bohrungen) der Matrize drücken (s. Fig. 1). Der Lackrohstoff Nitrocellulose wird dadurch verdichtet. Unterhalb der Matrize ist eine Abscherrvorrichtung, mit der die granulatartigen Formlinge auf die gewünschte Länge gebracht werden. Die Querschnittsform der Formlinge wird durch die Form des Lochquerschnitts bestimmt.

Hervorzuheben ist, daß unter Einhaltung bestimmter Verfahrenspartner fast keine Entfeuchtung der eingesetzten Nitrocellulose stattfindet und diese somit nicht in den Explosivstoff-Bereich unter 25 % Anfeuchtung kommt.

In dem Kollergang läuft wenigstens 1 Koller. Üblich sind 2 Koller; es können aber auch mehr als 2 Koller sein. Dies hängt von der Größe des Aggregates und dem Durchmesser der Koller ab. Das erhaltene verdichtete Material kann hart (mit scharfen Kanten) bis weich (leicht mit den Fingern zerdrückbar) sein.

Es ist aber auch möglich, daß auf einer geraden mit Löchern versehenen Matrize ein Rad bei der Hin- und Herbewegung die angefeuchtete Nitrocellulose durch die Matrize drückt und dabei verdichtet.

Für die Konsistenz der verdichteten Nitrocellulose ist bei kreisrunden Löchern in der Matrize das Preßverhältnis P verantwortlich. P ist definiert als Verhältnis der Lange der Bohrung zum Durchmesser der Bohrung in der Matrize:

$$P = \frac{\text{Länge der Bohrung}}{\text{Durchmesser der Bohrung}}$$

Das Preßverhältnis P sollte zwischen 0,5 und 5,0, bevorzugt zwischen 0,5 und 3,0 liegen.

Es ist auch möglich, daß die Löcher in der Matrize einen quadratischen, rechteckig, ovalen oder unregelmäßig geformten Querschnitt aufweisen. Wieviele Löcher pro Flächeneinheit der Matrize vorhanden sind, hängt von der Stabilität der Matrize ab. Durch die Verdichtung ist es möglich, das Schüttgewicht der eingesetzten Nitrocellulose um ein Vielfaches zu steigern und dadurch ein freifließendes (rieselfähiges) Material zu erhalten.

Das unverdichtete Material wird über ein Dosiergerät (wie z.B. Schnecke, Band) in den Kollergang gegeben. Es ist auch möglich, den Kollergang zu inertisieren, z.B. mit Stickstoff oder Kohlendioxid. Folgende Beispiele sollen das Verfahren beschreiben, aber nicht begrenzen.

**<u>Figur 1:</u>**

(1): Antriebswelle
(2): Koller
(3): Matrize mit Löcher
(4): Abscherr-Vorrichtung
(5): Gehäuse

d: Bohrungsdurchmesser
e: Bohrungslänge
$D_K$: Kollerdurchmesser
B: Kollerbreite
$D_M$: Matrizendurchmesser

**<u>Beispiel 1</u>**

Nitrocellulose der Norm A 30, angefeuchtet mit 34,6 % Ethanol, wird kontinuierlich mit 210 kg/h in den Kollergang gegeben (Matrizendurchmesser: $D_M$ = 175 mm, Kollerdurchmesser: $D_K$ = 130 mm, Kollerbreite: B = 27 mm, Kollerzahl: 2, Antriebswellendrehzahl= 150 min). Das Preßverhältnis betrug 2 (Lochdurchmesser: d= 6 mm, Lochform: kreisrund, Länge der Bohrung: 1 = 12 mm). Der Abstand der Abschervorrichtung zur Unterseite der Matrize betrug 20 mm. Die verdichtete Ware hat eine Feuchtigkeit von 34,2 % und ein Schüttgewicht von 578 g/l. Die Formlinge blieben auch nach einer achtwöchigen Lagerung in einer 110-I-Trommel rieselfähig.

**<u>Beispiel 2-7</u>**

Die Beispiele wurden gemäß Beispiel 1 ausgeführt. Die Versuchsparameter sind in der Tabelle 1 zusammengestellt.

| Beispiel | NC Normty p | Anfeuchtungsmittel | Feuchte | | Durchsatz | Schüttgewicht | | Matrize | | | Antriebswellen Drehzahl (min$^{-1}$) |
|---|---|---|---|---|---|---|---|---|---|---|---|
| | | | vor (%) | nach (%) | Feucht-NC (kg/h) | vor (gl/l) | nach (g/l) | D (mm) | L (mm) | P | |
| 1 | A 30 | Ethanol | 34,6 | 34,2 | 210 | 383 | 578 | 6 | 12 | 2 | 150 |
| 2 | E 27 | Ethanol | 32,4 | 31,5 | 116 | 253 | 565 | 6 | 12 | 2 | 150 |
| 3 | E 22 | Ethanol | 32,0 | 31,7 | 130 | 196 | 556 | 10 | 20 | 2 | 150 |
| 4 | E 34 | Ethanol | 34,1 | 31,9 | 332 | 438 | 602 | 10 | 20 | 2 | 150 |
| 5 | E 24 | Isopropanol | 35,2 | 35,0 | 190 | 191 | 556 | 8 | 16 | 2 | 150 |
| 6 | A 27 | Ethanol | 30,9 | 30,4 | 133 | 380 | 539 | 6 | 6 | 1 | 150 |
| 7 | E 22 | Ethanol | 32,8 | 31,7 | 57 | 196 | 526 | 6 | 6 | 1 | 201 |

**Patentansprüche**

1. Verfahren zur Herstellung verdichteter rieselfähiger Lackrohstoffe auf der Basis von Nitrocellulose, **dadurch gekennzeichnet, dass** der wasser- oder alkoholfeuchte Lackrohstoff durch eine mit Löchern versehene Matrize gedrückt wird, wobei keine Entfeuchtung der eingesetzten Nitrocellulose auf einen Wert von unter 25 % Anfeuchtung stattfindet.

2. Verfahren gemäß Anspruch 1, **dadurch gekennzeichnet, dass** das Pressverhältnis P

$$P = \frac{\text{Länge der Bohrung}}{\text{Durchmesser der Bohrung}} = 0{,}5 - 5{,}0{,}$$

vorzugsweise zwischen 0,5 und 3,0 beträgt.

3. Verfahren gemäß einem der Ansprüche 1 bis 2, **dadurch gekennzeichnet, dass** der Lackrohstoff durch die Matrizenlöcher mittels eines oder mehrerer umlaufender Koller gedrückt wird.

4. Verfahren gemäß einem der Ansprüche 1 bis 2, **dadurch gekennzeichnet, dass** der Lackrohstoff durch die Matrizenlöcher mittels eines oder mehrerer oszillierender Räder gedrückt wird.

5. Verfahren gemäß einem der Ansprüche 1 bis 4, **dadurch gekennzeichnet, dass** der verdichtete Lackrohstoff unterhalb der Matrize in Stücke gewünschter Länge abgescherrt wird.

6. Verfahren zur Herstellung granulatartiger Lackrohstoffe, **dadurch gekennzeichnet, dass** die als Lackrohstoff eingesetzte wasserfeuchte oder alkoholfeuchte Nitrocellulose einen Stickstoffgehalt ≤ 12,6% aufweist.

**Claims**

1. Method of producing compacted free-flowing varnish base materials based on nitrocellulose, **characterized in that** water-moist or alcohol-moist varnish base material is pressed through a die provided with holes, where there is no drying-out of the employed nitrocellulose to a value of less than 25 % moisture.

2. Method according to claim 1, **characterized in that** the pressing ratio P

$$P = \frac{\text{bore length}}{\text{bore diameter}} = 0.5 - 5.0{,}$$

preferably between 0.5 and 3.0.

3. Method according to one of claims 1 and 2, **characterized in that** the varnish base material is pressed through the die holes by means of one or more rotating runners.

4. Method according to one of claims 1 or 2, **characterized in that** the varnish base material is pressed through the die holes by means of one or more oscillating wheels.

5. Method according to any one of claims 1 to 4, **characterized in that** the compacted varnish base material is sheared below the die into sections of desired length.

6. Method for producing granular varnish base materials, **characterized in that** the water-moist or alcohol moist nitrocellulose used as varnish base material has a nitrogen content ≤ 12.6 %.

**Revendications**

1. Procédé de préparation de matière première de laque coulante compactée à base de nitrocellulose, **caractérisé en ce que** la matière première pour laque humidifiée par l'eau ou un alcool est compactée à travers une matrice prévue avec des trous où aucune élimination d'humidité de la nitrocellulose utilisée à une valeur inférieure à 25 % d'humidification n'a lieu.

2. Procédé selon la revendication 1, **caractérisé en ce que** le rapport de pression P est

$$P = \frac{\text{longueur du trou}}{\text{diamètre du trou}}$$

$$= 0{,}5 - 5{,}0, \text{ de préférence entre 0,5 et 3,0.}$$

3. Procédé selon l'une des revendications 1 à 2, **caractérisé en ce que** la matière première pour laque est comprimée à travers les trous de la matrice au moyen d'une ou de plusieurs meules mobiles.

4. Procédé selon l'une des revendications 1 à 2, **caractérisé en ce que** la matière première pour laque est comprimée à travers les trous de la matrice au moyen d'une ou de plusieurs roues oscillantes.

5. Procédé selon l'une des revendications 1 à 4, **caractérisé en ce que** la matière première pour laque comprimée est coupée sous la matrice en morceaux de longueur désirée.

6. Procédé de préparation de matière première pour laque en forme de granulat, **caractérisé en ce que** la nitrocellulose humidifiée par l'eau ou humidifiée par l'alcool utilisée comme matière première pour laque présente une quantité d'azote ≤ 12,6 %.

# Fig. 1

**IN DER BESCHREIBUNG AUFGEFÜHRTE DOKUMENTE**

**In der Beschreibung aufgeführte Patentdokumente**

- EP 137357 A
- GB 871299 B
- GB PS871299 A
- US PS5378826 A